# EUROPEAN PATENT APPLICATION

(11) **EP 1 719 923 A1**
(43) Date of publication of application: **08.11.2006**
(21) Application number: 06251385.8
(22) Date of filing: 15.03.2006
(51) Int. Cl.: F16B 2/24, A47B 91/02, A47C 9/10, F16B 7/14, F16M 11/32, A47C 3/38

(54) **Telescopic leg**

(30) Priority: 03.05.2005 GB 0508939; 19.09.2005 GB 0519044
(71) Applicant: JRC Products Limited, Diss, Norfolk IP22 1RZ (GB)
(72) Inventor: Powell, Jeffery Vernon, Rickinghall, Suffolk IP22 1ERR (GB)
(74) Representative: Nash, Keith Wilfrid

(57) **Abstract**

A telescopic leg which is adjustable in length comprising three relatively slidable sections. A releasable friction jamming mechanism acts between a pair of the sections whereby one section can be pulled out or pushed into the other section of the pair and secured in position by the jamming mechanism. Relative sliding between one of the pair of sections and a third section permits these two sections to be slid into an extended or a retracted position, and releasable locking means allows these two sections to be secured in either the extended or retracted position. Where the leg sections are of circular cross section relative rotation of one section relative to the other is prevented. The three sections comprise an inner section, slidable in an intermediate section, and an outer section in which the intermediate section is slidable and the friction jamming means is mounted at the lower end of the outer section to lock the intermediate section at any desired position relative to the outer section. The releasable locking means acts between the intermediate and inner sections. The inner section includes a hinged foot at one end. The three sections are of similar length, and the inner section is prevented from fully leaving the intermediate section, and it is prevented from fully leaving the outer section. The friction jamming means includes a spring loaded apertured lever which is biased into jamming engagement by the spring and is released from that engagement by lifting up (or pressing down) the lever against the action of the spring so that the lever becomes perpendicular to the leg section.An angler's bed-chair can be fitted with two pairs of multiple section legs one pair on each side of a central section on which an angler will normally sit. The jamming lever is located within a housing having an opening in one face to give access to the lever.The housing surrounds the leg section in the region of the lever. The latter can be wholly contained within the housing so that the it cannot be operated accidentally nor protrude so as to catch on clothing or cause injury. This protected lever arrangement can be incorporated into a telescopic leg having only two sliding sections

## Description

### Field of invention

This invention concerns legs for tables, chairs, anglers' bed-chairs, sun loungers and the like which are adjustable in length.

### Background

It is known to provide telescopic legs for tripods and monopods for photographic use and the principle has been incorporated in legs for bed-chairs used by anglers, to accommodate uneven ground and allow both to be collapsed and folded for storage and/or transportation.

Typically a tripod leg has included three (or even more) separate telescoping sections, thereby enabling the leg to be collapsed to a short overall length typically of the order of 250-300mm, and extended to a much greater overall length, usually in excess of 1 metre. Typically a three-section leg has been constructed from an outer sleeve section attached at one end to a camera mounting, an intermediate sleeve section which is slidable within the outer section and an inner sleeve section which is slidable within the intermediate section. A friction jamming mechanism is provided at the other end of the outer section to retain the intermediate section at selected positions relative to the outer section, and a similar mechanism is provided at the protruding end of the intermediate section, whereby the inner section can be locked into selected positions relative to the intermediate section.

By using friction locks, the sliding sections can be adjusted so that the overall leg length can be any length between a minimum (where the inner section is fully retracted into the intermediate section and the latter is fully retracted into the outer section) and a maximum, where both inner and intermediate sections have been pulled out to the maximum extent permitted.

A three-element leg for example can therefore vary in length by a factor of approximately 3:1.

In the case of anglers' bed-chairs the adjustability of the legs hitherto has been to accommodate uneven terrain, and to enable the collapsed legs to be folded beneath the seat squab. In general there has been no requirement to extend the legs to a great extent to elevate the seat squab and two section legs (with a maximum variation of 2:1) have proved adequate. This arises from the common preference on the part of anglers to sit low rather than high.

However the effort of getting up from, or down to, a low level seat is not inconsiderable, especially if the angler is well built, and/or tall and/or elderly, and there is a need for a bed-chair which can be adjusted to provide a seat at a higher level than a two-section telescoping leg can provide.

### Object of the invention

It is an object of the present invention to provide a telescoping leg especially but not exclusively for chairs, especially anglers' bed chairs, which will allow the seat portion of the structure to occupy relatively high and low positions, and yet still permit the leg to be folded beneath the framework of the structure for storage and/or transportation.

### Summary of the invention

According to the present invention a telescopic leg which is adjustable in length, is comprised of three relatively slidable sections, a releasable friction jamming mechanism acting between a pair of the sections whereby the inner section of the pair can be pulled out or pushed into the other section to any chosen position and secured in that position by the jamming mechanism, and wherein relative sliding movement is permitted between one of the said pair of sections and the third section, whereby these two sections can be slid apart into an extended position or slid together into a retracted position, and releasable locking means is provided by which the two sections are securable in either the extended or retracted positions.

Preferably the releasable locking means snaps into place as the two lockable sections move into their fully extended or fully retracted positions.

Typically the releasable locking means comprises a resiliently mounted button and the said two sections include openings through which the button will spring when the openings are aligned, the presence of the button in the two openings preventing sliding of the one lockable section relative to the other, and the locking is releasable by depressing the button so that it no longer protrudes through the opening in the outer of the said two lockable sections.

The leg sections may be of circular cross section in which event a keyway or other device is provided between the two lockable sections to prevent rotation of one section relative to the other. This prevents misalignment of the openings into which the resiliently mounted button is to spring, which could otherwise occur if relative rotation is permitted.

Alternatively at least to the lockable leg sections may be non-circular in cross section so that whilst relatively slidable in an axial sense, relative rotation is prevented. Thus they may for example be of oval or square cross section.

In a preferred arrangement the button is mounted on a spring within the inner of the two lockable sections so as to be aligned with an opening in the wall of that section, through which the button will try to protrude under the action of the spring, and the other (outer) lockable section is provided with two openings one near one end and the other near the other, and the outer section can slide relative to the inner section while the openings in the former do not register with the button, but when one of the openings in the outer section aligns with the opening in the inner section, the button will move under the influence of the spring, so as to occupy both openings, thereby preventing further relative sliding of the two lockable sections.

Although these two lockable sections are only capable of occupying fully extended and fully retracted positions, it will be seen that the three sections nevertheless allow an infinite variation of overall length of the three section leg, from a fully retracted length corresponding approximately to the length of the longest section to a fully extended length, corresponding to the sum of the useful lengths of the three sections.

In this connection the useful length of the inner and intermediate sections is less than their actual length since part of the length of the inner section must remain within the section within which it slides, to retain the former in place and maintain rigidity.

Typically the friction jamming means is mounted at the lower end of the outermost section to lock the intermediate section at any desired position relative to the former, and the releasable locking means acts between the intermediate and inner sections.

A friction jamming locking device is described in GB 2,258,151.

In a particularly preferred arrangement the friction jamming means includes a spring loaded apertured lever which is biased into jamming engagement by the spring and is released from that engagement by lifting up (or pressing down) against the action of the spring so that the lever becomes generally perpendicular to the leg section, and the jamming lever is located within a housing having an opening in one face to give access to the lever, and the housing surrounds the leg section in the region of the lever, and the latter is wholly contained within the housing so that the lever cannot be operated accidentally nor does the end of the lever protrude in a manner which can catch on clothing or cause injury to someone's leg.

Typically the innermost leg section includes a foot which preferably is hinged to the leg to allow the foot to be folded substantially flat against the leg for storage and to allow the foot to accommodate a sloping surface when in use.

Preferably the sections are formed from metal such as steel or aluminium tube and the button is likewise formed from metal, such as hardened steel, or a hard plastics material.

Typically the three sections are each of a generally similar length, but retaining means is provided to prevent the intermediate section from fully leaving the outermost section, and to prevent the innermost section from fully leaving the intermediate section.

Since the rigidity of the leg is important preferably the retaining means ensures that a sufficient length of each of the intermediate and innermost sections remains within the section in which it slides, when withdrawn to the maximum permitted by the retaining means, to ensure that the sections form a generally rigid structure whether extended or not.

In a typical bed-chair each of the leg sections is of the order of 200mm in length and preferably approximately 50mm of each sliding section remains in the section in which it slides, when the two occupy their fully extended condition.

As applied to an angler's bed-chair such as described and claimed in our copending GB Patent Application No. 0426200.2, two pairs of such legs are provided, one pair on each side of the central section of the bed-chair, so that the generally square central region which is the part on which the angler will normally sit, can be positioned approximately 200mm or 350mm or 500mm above the surface of the ground on which the chair rests.

The invention is not limited to use in anglers' bed-chairs and can be applied to any item of furniture, especially items of folding furniture, such as a folding chair or table or folding bed or sun-lounger.

The invention is of particular value when incorporated into folding furniture which is to be folded into the smallest possible configuration, such as an angler's bed-chair, since it retains the full range of adjustment of the length of the leg, but only requires one jamming mechanism. If two such mechanisms were incorporated, either the overall length of the leg when fully collapsed would be greater than is desirable for achieving a compact collapsed structure capable of fitting through the rear door opening of a typical family saloon car, or the range of length adjustment is insufficient to give a properly elevated seat when extended.

The invention also lies in an item of furniture, such a chair, sun lounger, angler's bed-chair or table when fitted with three section extendable legs, as aforesaid.

The invention also lies in a friction jamming means for a telescopic leg constructed as described above, in which the end of the jamming lever does not protrude beyond the face of the housing within which it is located.

The invention will now be described by way of example with reference to the accompanying drawings in which:-
Figure 1 is a side view partly in cross-section of a telescopic leg assembly embodying the invention;
Figure 2 is a scrap section of part of the leg assembly of Fig 1;
Figure 3 is a front elevation of a jamming lever leg locking device, and
Figure 4 is a side elevation of the device shown in Figure 3.

In the drawings, an outer tube 10 is adapted by a flange 12 at one end to be secured to a frame of a chair or angler's bed-chair or the like so as to depend from the latter.

Slidable within the tube 10 is an intermediate tube 14 and slidable within it is an inner tube 16.

Tube 16 carries a foot 18 at its lower end which includes a ball-joint by which part of the foot can be rotated relative to the tube 16 to accommodate an uneven surface or, as shown in dotted outline at 20, to be folded flat against the leg assembly for storage.

At the lower end of tube 10 is a housing 22 which retains within it a known hinged jamming plate 24 containing a non-circular opening 25 through which the protruding end of tube 24 passes, and is maintained at the jamming angle shown by a spring 26. Pushing the plate 24 downwardly against the spring 26 disengages the opening 25 from the exterior of 14 and allows the latter to be pushed or pulled relative to tube 10. However, in known manner, as soon as the pressure on the plate 24 is released the plate reverts to the position shown and jams against tube 14.

Any tendency for tube 14 to move into the tube 10 is prevented by this jamming action.

Sliding movement of the inner tube 16 relative to the intermediate tube 14 is prevented by the engagement of a spring loaded button 28 which is secured within the inner tube 16 in alignment with an opening 30 in the wall of tube 16, so that it can protrude therethrough.

The tube 14 includes a similar opening 31 and when tube 16 is in its retracted position opening 30 and 31 are aligned, so that the button 28 can protrude through both openings. In doing so, the button prevents relative movement of the two tubes 14, 16.

By fully depressing the button 28, the tube 16 can be pulled out of 14 until a second opening 32 in the wall of 16 aligns with the opening 31 in tube 14 and a second button 34 mounted below opening 32 in tube 16 can now protrude through both holes 30 and 32, thereby preventing further relative sliding between 14 and 16 until the button is once again pushed fully in.

In the position shown, the leg can be extended to any length up to the maximum permitted by withdrawing tube 14 from tube 10. If 10 is 200mm long and 14 is of similar length, then the extended length will be approximately 350mm if 50mm of 14 is to remain within the lower end of 10 to maintain rigidity. An annular flange 36 around 14 is arranged to engage an annular flange (not shown) around the interior of tube 10 to prevent tube 14 from being pulled out so as to leave less than 50mm of 14 within 10.

Since the jamming plate 24 will hold the tube 14 at any intermediate position between the two extremes of its travel within 10, the leg is fully adjustable between its minimum length of 200mm and the intermediate extension of 350mm.

If the leg is to be extended further, then tube 14 is first retracted fully into 10, and thereafter the button 28 is fully depressed and tube 16 is pulled out of 14 until the opening 32 registers with opening 31 in tube 14 allowing the second spring loaded button 34 to protrude through both 32 and 31, preventing further relative movement (in either direction) of tubes 14 and 16. The basic length of the leg is now approximately 350mm made up of tube 10 and the protruding length of tube 16. By depressing plate 24 and pulling tube 14 out from 10, so the leg can be lengthened to any length between 350mm and a maximum of 500mm, when the tube 14 is at its maximum extended position relative to 10.

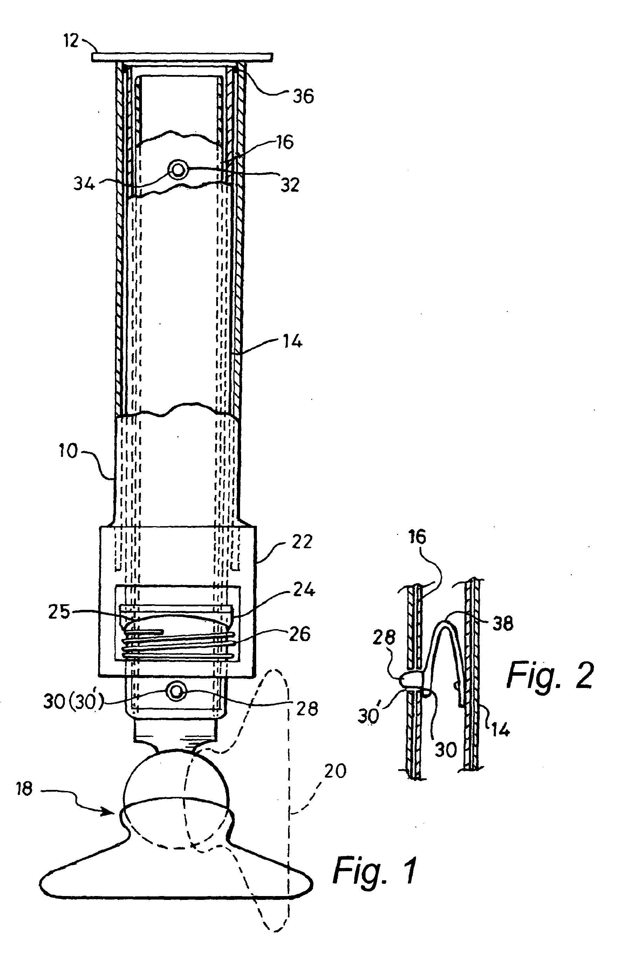

Fig 2 shows how button 28 can be mounted in tube 16, by means of a bent spring 38 secured to the inside wall of the tube opposite the opening 30. In Fig 2 the openings 30 and 31 are shown aligned so that the button 28 can protrude through both.

The second button 34 can be mounted in a similar manner in tube 16 at the axially spaced position within the tube, so as to register with the opening 32.

The tubes are shown as circular in cross section and if so, a keyway may be provided between 14 and 16 to prevent relative rotation so that buttons 28 and 32 will always align with opening 31' in 14 when 16 is pushed or pulled as appropriate relative to 14.

Alternatively at least these two tubes may be non-circular such as square cross section, so as to prevent any relative rotation and only permit relative sliding.

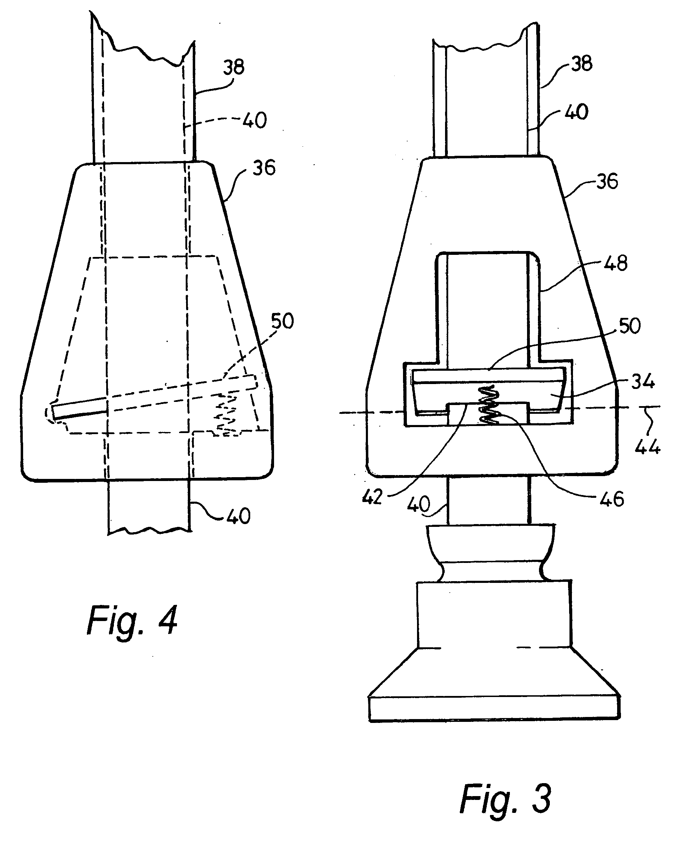

Figures 3 and 4 demonstrate a jamming lever device of the type described in GB 2,258,151 in which an apertured metal plate 34 is located within a housing 36 at the lower end of an outer hollow leg section 38. An inner leg section 40, slideable within 38, extends through the opening 42 in the plate 34, and the latter is pivotable about an axis 44 on one side of the leg 40.

The opening 42 is larger, measured perpendicular to the axis of pivoting 44, than is the corresponding dimension of the inner leg section 40, while the dimension of the opening parallel to the axis 44 is such that the opening is a close slipping fit around the leg 40.

A compression spring 46 acts between the housing 36 and the underside of the end of the plate where it extends beyond the leg 40 on the side of the leg opposite to that on which the pivot axis 44 is situated.

As can best be seen from Figure 4, the plate 34 is held captive in a groove 46 in the interior of the housing 36, which defines the axis of pivoting, and its other end terminates within the confines of the housing 36.

An opening 48 in the face of the housing gives access to the lever 34, which can be unjammed by pressing down on the edge 50 so as to compress the spring 46, and disengage the inside edge of the opening 42 from the face of the leg section 40, thereby allowing the latter to move relative to the housing 36 (and outer leg 38), while the plate 34 remained depressed.

Since the plate does not protrude beyond the opening 48 in the housing 36, there is no protruding metal plate which can be accidentally pushed down - so causing the leg to telescopically collapse. Nor is there any protruding metal on which clothing or skin can be caught.

## Claims

1. A telescopic leg which is adjustable in length is comprised of three relatively slidable section (10, 14, 16), and includes a releasable friction jamming mechanism (24, 26) acting between one pair of the sections (10, 14) whereby the inner section of the pair can be pulled out or pushed into the other section (10) of the pair to any chosen position, and secured in that position by the jamming mechanism, wherein relative sliding movement between one of the pair of sections (14) and the third section (16) permits these two sections to be slid apart into an extended position or slid together into a retracted position, **characterised by** releasable locking means (28, 38) by which the said two sections (14, 16) are securable in either the extended or retracted positions.

2. A telescopic leg as claimed in claim 1 wherein the releasable locking means comprises a resiliently mounted button (28) and the said two sections include openings (30, 30') through which the button will spring when the openings are aligned, the presence of the button in the two openings preventing sliding of the one section relative to the other, and the locking means is releasable by depressing the button so that it no longer protrudes through the opening in the outer of the said two sections (14).

3. A telescopic leg as claimed in claim 2, wherein the leg sections (10, 14, 16) are of circular cross section and rotation prevention means is provided between the two sections which are lockable in two positions only, to prevent rotation of one section relative to the other which would result in misalignment of the openings into which the resiliently mounted button is to spring.

4. A telescopic leg as claimed in claim 1, 2 or 3, wherein the three sections comprise an inner section, slidable in an intermediate section (14), and an outer section (10) in which the intermediate section is slidable, and the friction jamming means (24, 26) is mounted at the lower end of the outer section (10) to lock the intermediate section at any desired position relative to the outer section, and the releasable locking means (28, 38) acts between the intermediate and inner sections (14, 16).

5. A telescopic leg as claimed in claim 4, wherein a foot (18) is hinged to one end of the inner section to allow the foot to be folded substantially flat thereon and to allow the foot to accommodate a sloping surface when in use.

6. A telescopic leg as claimed in any of claims 1 to 5, wherein the three sections (10, 14, 16) are of a generally similar length.

7. A telescopic leg as claimed in any of claims 1 to 6, wherein retaining means is provided to prevent the inner section from fully leaving the intermediate section, and to prevent the intermediate section from fully leaving the outer section.

8. A telescopic leg as claimed in any of claims 1 to 7 wherein the friction jamming means includes a spring loaded apertured lever (24; 34) which is biased into jamming engagement by the spring (26; 46) and is released from that engagement by lifting up (or pressing down) against the action of the spring so that the lever becomes generally perpendicular to the leg section (14; 40), and the jamming lever is located within a housing (22; 36) having an opening (48) in one face to give access to the lever, and the housing surrounds the leg section in the region of the lever.

9. A telescopic leg as claimed in claim 8 wherein the lever (34) is wholly contained within the housing (36) so that it does not protrude beyond the opening (48) in the housing.

10. A chair or bed-chair when fitted with two pairs of legs, each being leg constructed as claimed in any one of claims 1 to 9, one pair on each side of a central section of the chair or bed-chair, on which, when in use, the occupant will normally sit.
